# EUROPEAN PATENT APPLICATION

(11) **EP 2 096 527 A1**
(43) Date of publication of application: **02.09.2009**
(21) Application number: 08003708.8
(22) Date of filing: 28.02.2008
(51) Int. Cl.: G06F 3/06

(54) **A solit-state disk**

(71) Applicant: Dotop Technology, Inc., Jhonghe City T'ai pei 235 (TW)
(72) Inventor: Chen, Shih-Wen, Banciao City Taipei County 220 (TW)
(74) Representative: Becker Kurig Straus

(57) **Abstract**

A solid-state disk comprising a board and a plurality of connecting interfaces is provided. The plurality of connecting interfaces comprise a mini peripheral component interconnect express (Mini PCI Express) interface, a serial advanced technology attachment (SATA) interface and an universal serial bus (USB) interface, wherein the Mini PCI Express interface is placed on a side of the board and connects to a expandable memory, the SATA interface is placed on a side of board and connects to a host, the USB interface is placed on a side of the board and is connects to a host.

## Description

### BACKGROUND

### Field of Invention

The present invention relates to a solid-state disk. More particularly, the present invention relates to a solid-state disk comprising a plurality of connecting interfaces.

### Description of Related Art

Solid-state disks are new data storage technology. Compared to conventional type of date storage devices with magnetic read/write heads and the fluid dynamic bearing, solid-state disks are more resistant to shocks. The efficiency and speed are also far better than conventional date storage devices. Thus, the solid-state disk has the potential to become the mainstream of the date storage technology in the future.

Data storage devices, and in particular, hard disk drives (HDD) can be connected to a host system internally or externally. Internal host interface connection types include both the serial advanced technology attachment (SATA) interface and the integrated drive electronics interface(IDE). Drives are connected internally to ensure the drive is connected to the host system for a long duration of time. External hard drives are typically connected to the host system through a universal serial bus (USB) interface. Disk drives connected externally through the USB interface are typically known as portable storage devices and are only temporarily connected to the host system.

Solid-state disks still follow the design of the conventional date storage device described above. That is, solid state disks are designed with separate interfaces for internal connection to the host and external connection to the host. If a user wants to keep the disk in the host for a long time, but occasionally connect the disk to other hosts to transfer the data, the chassis of the host must be opened every time transfer data using a disk with a SATA or IDE interface on their solid-state disk. Also, the solid-state disk connecting interfaces nowadays doesn't allow the expandable memory on the solid-state disk to be replaced. Expandable memory is a desirable user feature.

Accordingly, what is needed is a solid-state disk with a replaceable expandable memory interface and an integration of the two kinds of interfaces described above to overcome the above issues. The present invention addresses such a need.

### SUMMARY

A solid-state disk comprising a board and a plurality of connecting interfaces is provided. The connecting interfaces comprise a mini peripheral component interconnect express (Mini PCI Express) interface, a serial advanced technology attachment (SATA) interface and an universal serial bus (USB) interface, wherein the Mini PCI Express interface is placed on a side of the board and is to connect a expandable memory, the SATA interface is placed on a side of board and to connect to a host, the USB interface is placed on a side of the board and to connect to a host.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:

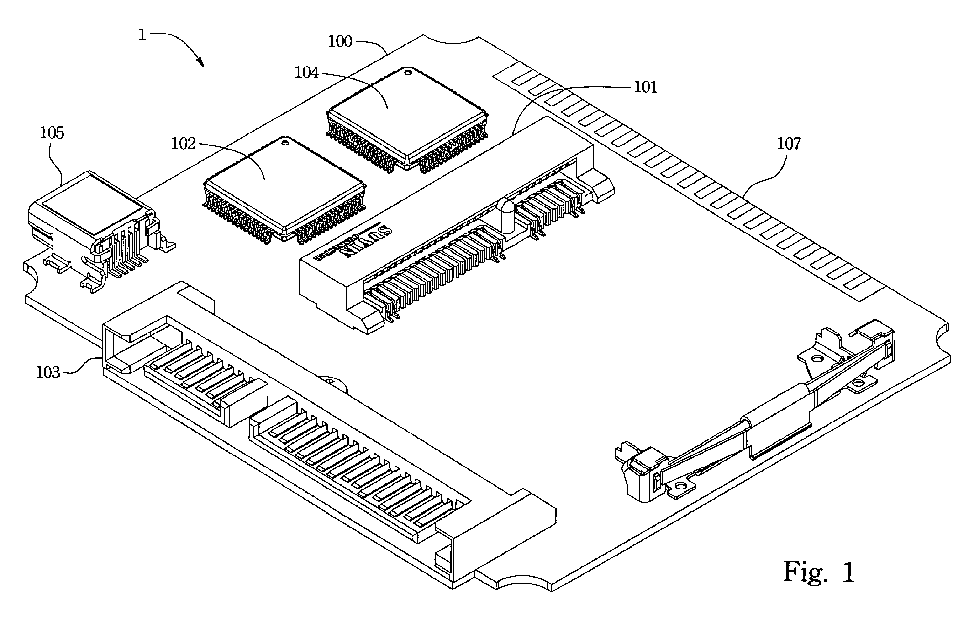

Fig. 1 is a 3-dimensional view of a solid-state disk of an embodiment of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

Please refer to Fig. 1, a 3-dimensional view of a solid-state disk 1 of an embodiment of the present invention. The solid-state disk 1 comprises a board 100 and three connecting interfaces, wherein the three connecting interfaces comprises: a mini peripheral component interconnect express (Mini PCI Express) interface 101, a serial advanced technology attachment (SATA) interface 103 and an universal serial bus (USB) interface 105. The Mini PCI Express interface 101 is placed on a side of the board 100 to connect an expandable memory (not shown in the drawing); the SATA interface 103 is placed on a side of the board 100 to connect a host(not shown in the drawing); the USB interface 105 is placed on a side of the board 100 to connect to a host. (not shown in the drawing). The solid-state disk 1 further comprises an integrated drive electronics (IDE) interface 107 which is placed on a side of the board 100 to connect to a host.

In the present embodiment, the solid-state disk 1 further comprises two chips 102 and 104 placed on a side of the board 100. The chip 102 controls the communication and transmission of the Mini PCI Express interface 101, the SATA interface 103 and the IED interface 107. The chip 104 controls the communication and transmission of the Mini PCI Express interface 101 and the USB interface 105. Through the arrangement of the connecting interfaces and the chips described above, the user can choose the connecting interfaces in different conditions, and can replace the expandable memory on the Mini PCI Express interface 101.

When the SATA interface 103 and the USB interface 105, or the IDE interface 107 and the USB interface 105 are connected to a host at the same time, the chip102 and 104 can choose the SATA interface 103 or the IDE interface 107 with which to establish a substantial connection.

The above embodiment shows that the solid-state disk provides different connecting interfaces for different conditions, and can replace the expandable memory on the Mini PCI Express interface easily.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A solid-state disk comprising a board and a plurality of connecting interfaces, wherein the plurality of connecting interfaces comprises:
a mini peripheral component interconnect express interface placed on a side of the board to connect an expandable memory;
a serial advanced technology attachment interface placed on a side of the board to connect a host; and
an universal serial bus interface on a side of the board to connect a host.

2. The solid-state disk of claim 1, wherein the solid-state disk is connected to a host through the serial advanced technology attachment interface and the universal serial bus interface at the same time, the serial advanced technology attachment interface is chosen to perform a substantial connection.

3. The solid-state disk of claim 1, wherein the plurality of connecting interfaces further comprises an integrated drive electronics interface which is placed on a side of the board to connect to a host.

4. The solid-state disk of claim 1, further comprising at least a chip placed on a side of the board to control the communication and transmission of the mini peripheral component interconnect express interface, the serial advanced technology attachment interface and the universal serial bus interface.
